(19) Europäisches Patentamt
European Patent Office
Office européen des brevets

(11) **EP 3 476 035 B1**

(12) **EUROPÄISCHE PATENTSCHRIFT**

(45) Veröffentlichungstag und Bekanntmachung des Hinweises auf die Patenterteilung:
**27.11.2019 Patentblatt 2019/48**

(51) Int Cl.:
***H02M 7/5387*** *(2007.01)* ***H02M 7/493*** *(2007.01)*

(21) Anmeldenummer: **17745675.3**

(22) Anmeldetag: **18.07.2017**

(86) Internationale Anmeldenummer:
**PCT/EP2017/068070**

(87) Internationale Veröffentlichungsnummer:
**WO 2018/050321 (22.03.2018 Gazette 2018/12)**

(54) **REGELUNG VON PHASENSTRÖMEN EINES WECHSELRICHTERS**

CONTROL OF PHASE CURRENTS OF AN INVERTER

RÉGULATION DE COURANTS DE PHASES D'UN ONDULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2016 EP 16189018**

(43) Veröffentlichungstag der Anmeldung:
**01.05.2019 Patentblatt 2019/18**

(73) Patentinhaber: **Siemens Aktiengesellschaft**
**80333 München (DE)**

(72) Erfinder:
- **BENESCH, Norbert**
  **90562 Heroldsberg (DE)**
- **WIESSMANN, Harald**
  **91058 Erlangen (DE)**

(56) Entgegenhaltungen:
**CN-A- 105 870 969    US-A- 4 641 075**

- YU ZHANG ET AL: "Sliding mode based zero-sequence current mitigation of parallel-connected power converters", ELECTRIC MACHINES AND DRIVES CONFERENCE, 2009. IEMDC '09. IEEE INTERNATIONAL, IEEE, PISCATAWAY, NJ, USA, 3. Mai 2009 (2009-05-03), Seiten 1658-1663, XP031475994, ISBN: 978-1-4244-4251-5
- SCHAFER MARKUS ET AL: "Multilevel direct current control for grid-connected inverters", 2015 17TH EUROPEAN CONFERENCE ON POWER ELECTRONICS AND APPLICATIONS (EPE'15 ECCE-EUROPE), JOINTLY OWNED BY EPE ASSOCIATION AND IEEE PELS, 8. September 2015 (2015-09-08), Seiten 1-7, XP032800130, DOI: 10.1109/EPE.2015.7309127
- MANSOUR MOHSENI ET AL: "A New Vector-Based Hysteresis Current Control Scheme for Three-Phase PWM Voltage-Source Inverters", IEEE TRANSACTIONS ON POWER ELECTRONICS, INSTITUTE OF ELECTRICAL AND ELECTRONICS ENGINEERS, USA, Bd. 25, Nr. 9, 1. September 2010 (2010-09-01), Seiten 2299-2309, XP011306593, ISSN: 0885-8993

**Beschreibung**

Die Erfindung betrifft die Regelung von Phasenströmen eines dreiphasigen Wechselrichters.

Der Wechselrichter erzeugt gepulste Phasenspannungen, die mehrere Spannungswerte annehmen können. Dazu weist der Wechselrichter für jede Phase eine Schalteinheit mit mehreren Schaltzuständen auf, durch die die Phasenspannung der Phase jeweils auf einen der Spannungswerte gelegt wird.

Ein bei der Regelung von Phasenströmen eines dreiphasigen Wechselrichters auftretendes Problem ist das mögliche Auftreten eines Nullsystemstroms. Ein Nullsystemstrom eines Wechselrichters ergibt sich als nicht verschwindende Summe der drei Phasenströme. Nullsystemströme können insbesondere zu Kreisströmen führen, die sich über mit dem Wechselrichter verbundene elektrische Leiter, beispielsweise auch Erdleiter, schließen und zu unerwünschten Systemschwingungen führen können. Insbesondere können in parallel geschalteten Wechselrichtern Kreisströme auftreten, die zwischen den einzelnen Wechselrichtern fließen und die Gesamtleistung der parallel geschalteten Wechselrichter reduzieren. Parallelschaltungen mehrerer Wechselrichter werden häufig verwendet, um die einzelnen Wechselrichter zu einem Wechselrichter mit einer höheren Gesamtleistung und Verfügbarkeit zusammenzuschalten.

US 4641075 A offenbart eine Regelung von Ausgangsströmen eines Wechselrichters, wobei der Schaltzustand eines Schaltelements des Wechselrichters während einer Zeitdauer beibehalten wird, in der sich ein Phasenwinkel einer bestimmten idealen Phasenspannung in einem vorgegebenen Phasenwinkelbereich befindet.

Yu Zhang et al: "Sliding mode based zero-sequence current mitigation of parallel-connected power converters", Electric Machines and Drives Conference, 2009, IEMDC'09, IEEE International, Seiten 1658-1663, DOI: 10.1109/IEMDC.2009.5075426 offenbart ein Verfahren zur Reduzierung von Nullsystemströmen, die als Kreisströme in parallel geschalteten dreiphasigen Wechselrichtern fließen.

Der Erfindung liegt die Aufgabe zugrunde, eine insbesondere hinsichtlich der Reduzierung von Nullsystemströmen verbesserte Regelung von Phasenströmen eines dreiphasigen Wechselrichters anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Bei einem erfindungsgemäßen Verfahren zur Regelung von Phasenströmen eines dreiphasigen Wechselrichters werden die Phasenströme des Wechselrichters mit einer direkten Hysteresestromregelung geregelt und eine ausgewählte Phase des Wechselrichters wird zusätzlich in Abhängigkeit von einem Nullsystemstrom des Wechselrichters geschaltet.

Unter einer Hystereseregelung wird eine Regelung verstanden, bei der die Regelgröße in einem Toleranzbereich um einen Sollwert gehalten wird. Der Toleranzbereich wird im Folgenden als Hysteresefenster bezeichnet. Unter einer direkten Stromregelung wird eine Stromregelung verstanden, deren Pulsmuster direkt aus einem Stromfehler abgeleitet wird. Bei einer indirekten Stromregelung hingegen wird zunächst ein Spannungssollwert ermittelt und anhand dieses Spannungswertes wird das Pulsmuster bestimmt.

Die Erfindung kombiniert eine direkte Hysteresestromregelung . der Phasenströme eines Wechselrichters mit einer von einem Nullsystemstrom des Wechselrichters abhängigen Schaltung einer Phase des Wechselrichters, die hier als ausgewählte Phase bezeichnet wird.

Verglichen mit einer auf Pulsweitenmodulation basierenden indirekten Stromregelung ermöglicht eine direkte Stromregelung vorteilhaft eine höhere Dynamik und Robustheit, beispielsweise gegenüber Änderungen von Parametern der Regelstrecke, da bei einer auf Pulsweitenmodulation basierenden indirekten Stromregelung die innerhalb der Pulsperioden verwendeten Pulsmuster der Pulsweitenmodulation vorausberechnet werden müssen.

Eine von einem Nullsystemstrom des Wechselrichters abhängige Schaltung einer ausgewählten Phase des Wechselrichters ermöglicht darüber hinaus, den Nullsystemstrom des Wechselrichters zu reduzieren, der zu einem Kreisstrom und zu durch den Kreisstrom verursachten unerwünschten Systemschwingungen führen kann.

Die Erfindung sieht vor, dass ein erstes Hysteresefenster für den Nullsystemstrom vorgegeben wird und die ausgewählte Phase geschaltet wird, wenn der Nullsystemstrom das erste Hysteresefenster verlässt. Diese Ausgestaltung der Erfindung ermöglicht die Begrenzung des Nullsystemstroms des Wechselrichters auf ein Hysteresefenster für den Wechselrichter.

Die Erfindung sieht vor, dass die ausgewählte Phase nicht geschaltet wird, wenn der Nullsystemstrom sich innerhalb des ersten Hysteresefensters befindet. Diese Ausgestaltung der Erfindung sieht eine Modifikation eines so genannten Flat-Top-Verhaltens vor. Bei einer herkömmlichen Flat-Top-Modulation wird in jeder Taktperiode der Regelung eine Phase nicht geschaltet, um die Anzahl der Schaltvorgänge und damit die Schältverluste zu reduzieren. Dieses Verhalten kann durch geeignetes Ansteuern der Schalteinheiten des Wechselrichters auch mit einer direkten Stromregelung erreicht werden. Die erfindungsgemäße Modifikation des Flat-Top-Verfahrens mit direkter Stromregelung sieht vor, dass die ausgewählte Phase diejenige Phase ist, die bei dem Flat-Top-Verfahren als nichtschaltende Phase vorgesehen ist. Diese Phase wird also nur in Abhängigkeit von dem Nullsystemstrom des Wechselrichters geschaltet.

Eine weitere Ausgestaltung der Erfindung sieht vor, dass die ausgewählte Phase in Abhängigkeit von einer Phasenlage der benötigten Ausgangsspannungen gewechselt wird. Beispielsweise wird als die ausgewählte Phase jeweils die Phase mit der betragsmäßig größten Phasenspannung des Wechselrichters verwendet. Diese Ausgestaltungen der Erfindung koppeln also die Auswahl der in Abhängigkeit von dem Nullsystemstrom geschalteten Phase an die Phasenlage der Phasenspannungen des Wechselrichters. Dadurch können insbesondere bei annähernd gleicher Phasenlage von Phasenströmen und -spannungen Schaltverluste weiter reduziert werden, indem jeweils die Schaltfrequenz der Phase mit der momentan höchsten Stromstärke minimiert wird.

Eine weitere Ausgestaltung der Erfindung sieht vor, dass als Hysteresestromregelung eine SDHC-Stromregelung verwendet wird. Unter einer so genannten SDHC-Stromregelung (SDHC = Switched Diamond Hysteresis Control) wird ein Stromregelungsverfahren verstanden, das in H. Wießmann, Hochdynamisches direktes Stromregelverfahren für Pulswechselrichter im Vergleich zu PWM-Verfahren, ISBN 978-3843904759, Verlag Dr. Hut 2012 veröffentlicht wurde. Bei einem SDHC-Verfahren werden zur Stromregelung eines Umrichters zu jedem Zeitpunkt vier benachbarte Raumzeiger verwendet, deren Spitzen eine Raute bilden. Das SDHC-Verfahren verbindet vorteilhaft die hohe Dynamik und Robustheit einer direkten Hysteresestromregelung mit dem hervorragenden stationären Verhalten eines raumzeigermodulierten Umrichters. Zudem besitzt das SDHC-Verfahren ein inhärentes Flat-Top-Verhalten.

Das erfindungsgemäße Verfahren ist insbesondere zur Regelung von Phasenströmen mehrerer parallel geschalteter dreiphasiger Wechselrichter vorgesehen, wobei die Phasenströme jedes Wechselrichters mit dem erfindungsgemäßen Verfahren geregelt werden. Dadurch können vorteilhaft insbesondere Kreisströme, die zwischen den einzelnen parallel geschalteten Wechselrichtern auftreten können, reduziert werden. Derartige Kreisströme verringern die Gesamtleistung der parallel geschalteten Wechselrichter, da sie zwischen den parallel geschalteten Wechselrichtern fließen und daher nicht zu den Netzströmen beitragen, die von den parallel geschalteten Wechselrichtern nach außen an ein Netz abgegeben werden.

Eine Ausgestaltung der Regelung der Phasenströme parallel geschalteter Wechselrichter sieht vor, dass für jeden Wechselrichter ein Iststromraumzeiger für Istwerte der Phasenströme des Wechselrichters innerhalb eines zweiten Hysteresefensters um einen Sollstromraumzeiger gehalten wird. Dabei wird der Iststromraumzeiger eines ersten Wechselrichters aus allen drei Phasenströmen des ersten Wechselrichters gebildet, und der Iststromraumzeiger jedes weiteren Wechselrichters wird aus genau zwei Phasenströmen des Wechselrichters unter der Annahme gebildet, dass sich alle drei Phasenströme des Wechselrichters zu Null addieren, wobei die Auswahl der beiden Phasenströme, aus denen der Iststromraumzeiger gebildet wird, variiert wird.

Auch die vorgenannte Bildung der Iststromraumzeiger zur Regelung der Phasenströme dient dazu, zwischen den parallel geschalteten Wechselrichtern fließende Kreisströme zu reduzieren. Dazu wird der Iststromraumzeiger jedes von einem ersten Wechselrichter verschiedenen weiteren Wechselrichters zu jedem Zeitpunkt aus genau zwei Phasenströmen gebildet, wobei angenommen wird, dass sich alle drei Phasenströme des Wechselrichters zu Null addieren, auch wenn dies im allgemeinen (nämlich bei einem nicht verschwindenden Nullsystemstrom) tatsächlich nicht der Fall ist. Dadurch werden die beiden Phasenströme, aus denen der Iststromraumzeiger eines der weiteren Wechselrichter gebildet wird, auf ihre Sollwerte geregelt, auch wenn ein Nullsystemstrom dieses Wechselrichters nicht verschwindet. Der dritte Phasenstrom wird zwar bei einem nicht verschwindenden Nullsystemstrom nicht auf seinen Sollwert geregelt. Jedoch wird durch das Variieren, d. h. durch ein zeitlich aufeinander folgendes Wechseln der Auswahl derjenigen Phasenströme, aus denen der Iststromraumzeiger des weiteren Wechselrichters jeweils gebildet wird, erreicht, dass alle drei Phasenströme nach einer kurzen Einschwingphase der Regelung wenigstens annähernd (innerhalb des zweiten Hysteresefensters) ihren Sollwerten entsprechen. Dadurch wird ein Nullsystemstrom in jedem der weiteren Wechselrichter jeweils beim Wechseln derjenigen Phase ausgeregelt, deren Phasenstrom nicht zur Bildung des Iststromraumzeigers verwendet wird. Durch die erfindungsgemäße Regelung einer ausgewählten Phase des Wechselrichters in Abhängigkeit von dem Nullsystemstrom wird der Nullsystemstrom eines weiteren Wechselrichters zusätzlich auch zwischen den Wechseln derjenigen Phase ausgeregelt, deren Phasenstrom nicht zur Bildung des Iststromraumzeigers verwendet wird. Außerdem wird auch ein Nullsystemstrom des ersten Wechselrichters ausgeregelt.

Eine weitere Ausgestaltung der Regelung der Phasenströme parallel geschalteter Wechselrichter sieht vor, dass die Phasenströme jedes Wechselrichters unabhängig von den Istwerten der Phasenströme der anderen Wechselrichter geregelt werden. Gemäß dieser Ausgestaltung der Erfindung wird keine Kommunikation zwischen den einzelnen Wechselrichtern eingesetzt. Dadurch wird vorteilhaft die Modularität des aus mehreren Wechselrichtern bestehenden Gesamtsystems erhöht, so dass Wechselrichter in einfacher Weise zusammengeschaltet werden können, ohne eine Kommunikation zwischen den Wechselrichtern implementieren zu müssen. Ferner wird der Aufwand zur Realisierung des Gesamtsystems reduziert und die Robustheit des Gesamtsystems wird erhöht.

Eine weitere Ausgestaltung der Regelung der Phasenströme parallel geschalteter Wechselrichter sieht vor, dass für jeden der weiteren Wechselrichter als die ausgewählte Phase jeweils diejenige Phase verwendet wird, deren Phasenstrom nicht zur Bildung des Iststromraumzeigers verwendet wird. Vorzugsweise wird dabei die jeweils ausgewählte Phase gemäß des oben genannten modifizierten Flat-Top-Verhaltens nur in Abhängigkeit von dem Nullsystemstrom geschaltet. Dadurch wird bei nahezu nullsystemstromfreien Phasenströmen die ausgewählte Phase nicht geschaltet und es ergibt sich die übliche Flat-Top-Modulation, die vorteilhaft die Anzahl der Schaltvorgänge und damit die Schaltverluste durch die Schaltvorgänge reduziert. Wenn keine ständige Anregung eines Nullsystemstroms auftritt, erfolgen somit nur wenige Schaltvorgänge in den jeweils ausgewählten Phasen, so dass sich eine nur geringe Abweichung von der üblichen Flat-Top-Modulation ergibt.

Eine weitere Ausgestaltung der Regelung der Phasenströme parallel geschalteter Wechselrichter sieht vor, dass für alle Wechselrichter zu jedem Zeitpunkt derselbe Sollstromraumzeiger verwendet wird. Dadurch werden vorteilhaft die Wechselrichter gleichmäßig belastet und die Stromregelung weiter vereinfacht.

Eine weitere Ausgestaltung der Regelung der Phasenströme parallel geschalteter Wechselrichter sieht vor, dass jeder Iststromraumzeiger und jeder Sollstromraumzeiger in einem statorfesten Koordinatensystem gebildet werden. Dabei wird der Iststromraumzeiger des ersten Wechselrichters (WR1) beispielsweise gemäß

$$\begin{pmatrix} i_{\alpha\_WR1} \\ i_{\beta\_WR1} \\ i_{0\_WR1} \end{pmatrix} = \frac{1}{3} \begin{pmatrix} 2 & -1 & -1 \\ 0 & \sqrt{3} & -\sqrt{3} \\ 1 & 1 & 1 \end{pmatrix} * \begin{pmatrix} i_{U\_WR1} \\ i_{V\_WR1} \\ i_{W\_WR1} \end{pmatrix}$$

gebildet, wobei $i_{U\_WR1}$, $i_{V\_WR1}$, $i_{W\_WR1}$ die Phasenströme (genauer: Istwerte der Phasenströme) des ersten Wechselrichters bezeichnen. Der Iststromraumzeiger jedes weiteren Wechselrichters wird in Abhängigkeit von den für seine Bildung verwendeten Phasenströmen beispielsweise gemäß

$$\begin{pmatrix} i_{\alpha\_WR2} \\ i_{\beta\_WR2} \\ i_{0\_WR2} \end{pmatrix}^{*} = \frac{1}{3} \begin{pmatrix} 3 & 0 & 0 \\ \sqrt{3} & 2\sqrt{3} & 0 \\ 0 & 0 & 0 \end{pmatrix} * \begin{pmatrix} i_{U\_WR2} \\ i_{V\_WR2} \\ i_{W\_WR2} \end{pmatrix}$$

oder gemäß

$$\begin{pmatrix} i_{\alpha\_WR2} \\ i_{\beta\_WR2} \\ i_{0\_WR2} \end{pmatrix}^{**} = \frac{1}{3} \begin{pmatrix} 0 & -3 & -3 \\ 0 & \sqrt{3} & -\sqrt{3} \\ 0 & 0 & 0 \end{pmatrix} * \begin{pmatrix} i_{U\_WR2} \\ i_{V\_WR2} \\ i_{W\_WR2} \end{pmatrix}$$

oder gemäß

$$\begin{pmatrix} i_{\alpha\_WR2} \\ i_{\beta\_WR2} \\ i_{0\_WR2} \end{pmatrix}^{***} = \frac{1}{3} \begin{pmatrix} 3 & 0 & 0 \\ -\sqrt{3} & 0 & -2\sqrt{3} \\ 0 & 0 & 0 \end{pmatrix} * \begin{pmatrix} i_{U\_WR2} \\ i_{V\_WR2} \\ i_{W\_WR2} \end{pmatrix}$$

gebildet, wobei $i_{U\_WR2}$, $i_{V\_WR2}$, $i_{W\_WR2}$ die Phasenströme (genauer: Istwerte der Phasenströme) eines weiteren Wechselrichters bezeichnen. Diese Ausgestaltungen der Erfindung realisieren die oben genannte vorteilhafte Bildung der Iststromraumzeiger der Wechselrichter konkret durch so genannte Clarke-Transformationen der Istwerte der Phasenströme. Für die weiteren Wechselrichter werden dabei vorzugsweise jeweils nur zwei Phasenströme für die Transformation in statorfesten Koordinaten verwendet.

Eine erfindungsgemäße Regelungsvorrichtung zur Regelung von Phasenströmen eines dreiphasigen Wechselrichters umfasst eine Strommessvorrichtung zur Erfassung der Istwerte der Phasenströme des Wechselrichters und eine Hysteresestromregelvorrichtung mit einem ersten Hystereseregler und einem zweiten Hystereseregler. Von dem ersten Hystereseregler werden Standardschaltsignale für eine direkte Hysteresestromregelung der Phasenströme erzeugt. Von dem zweiten Hystereseregler wird ein Zusatzschaltsignal für eine ausgewählte Phase des Wechselrichters in Abhängigkeit von einem Nullsystemstrom des Wechselrichters erzeugt. Die Vorteile einer derartigen Regelungsvorrichtung ergeben sich aus den oben genannten Vorteilen des erfindungsgemäßen Verfahrens.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:

FIG 1     ein Ersatzschaltbild eines Wechselrichters,

FIG 2     einen Schaltplan eines Ausführungsbeispiels eines Wechselrichters und einer Regelungsvorrichtung zur Regelung von Phasenströmen des Wechselrichters,

FIG 3     schematisch den Aufbau einer Hysteresestromregelvorrichtung,

FIG 4     ein Hysteresediagramm für einen Nullsystemstrom eines Wechselrichters,

FIG 5     ein Ersatzschaltbild zweier parallel geschalteter Wechselrichter, und

FIG 6     einen Schaltplan eines Ausführungsbeispiels zweier parallel geschalteter Wechselrichter und einer Regelungsvorrichtung zur Regelung von Phasenströmen der Wechselrichter.

Einander entsprechende Teile sind in den Figuren mit denselben Bezugszeichen versehen.

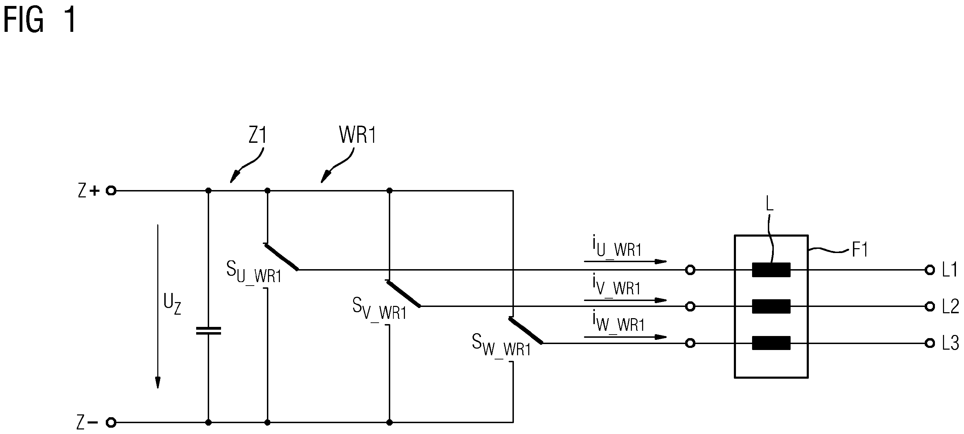

FIG 1 zeigt ein Ersatzschaltbild eines dreiphasigen Wechselrichters WR1.

Der Wechselrichter WR1 weist eingangsseitig einen Gleichspannungszwischenkreis Z1 mit einem positiven Zwischenkreispotential Z+, einem negativen Zwischenkreispotential Z- und einer Zwischenkreisspannung $U_Z$, die die Differenz dieser Zwischenkreispotentiale Z+, Z- ist, auf.

Ferner umfasst der Wechselrichter WR1 für jede seiner Phasen einen Schalter $S_{U\_WR1}$, $S_{V\_WR1}$, $S_{W\_WR1}$ mit einem ersten Schaltzustand, der ein Phasenpotential der Phase auf das positive Zwischenkreispotential Z+ legt, und einem zweiten Schaltzustand, der das Phasenpotential der Phase auf das negative Zwischenkreispotential Z- legt. Eine Änderung des Schaltzustands des Schalters $S_{U\_WR1}$, $S_{V\_WR1}$, $S_{W\_WR1}$ einer Phase wird hier als Schalten der Phase bezeichnet.

Der Wechselrichter WR1 ist ausgangsseitig über einen Filter F1 an ein Netz N gekoppelt. Der Filter F1 weist für jede Phase des Wechselrichters WR1 mindestens eine Induktivität L auf. Jede Phase ist mit einer netzseitigen Anschlussklemme L1, L2, L3 verbunden. Zwischen dem Schalter $S_{U\_WR1}$, $S_{V\_WR1}$, $S_{W\_WR1}$ und der Anschlussklemme L1, L2, L3 einer Phase fließt ein Phasenstrom $i_{U\_WR1}$, $i_{V\_WR1}$, $i_{W\_WR1}$ der Phase.

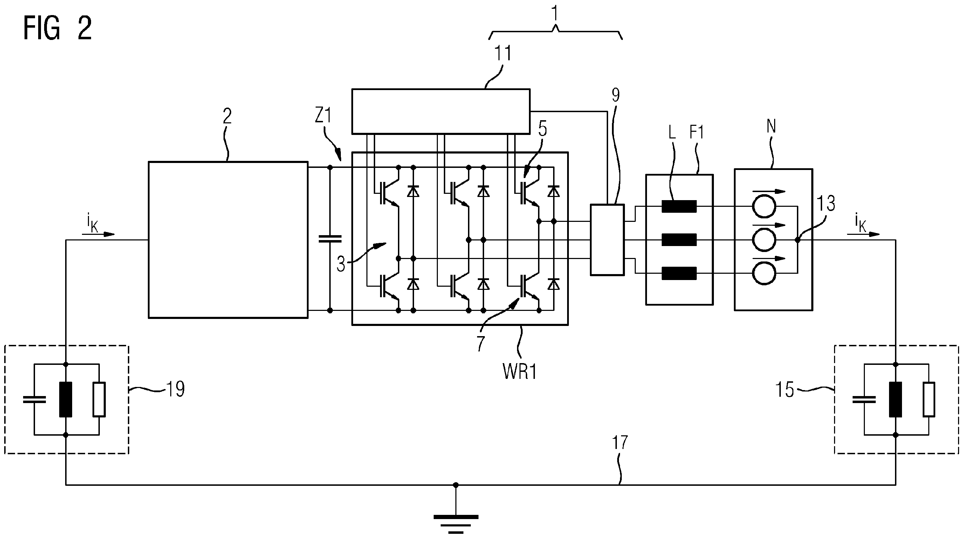

FIG 2 zeigt einen Schaltplan eines konkreten Ausführungsbeispiels eines dreiphasigen Wechselrichters WR1 sowie schematisch eine Regelungsvorrichtung 1 zur Regelung der Phasenströme $i_{U\_WR1}$, $i_{V\_WR1}$, $i_{W\_WR1}$ des Wechselrichters WR1 und einer eingangsseitig an die Gleichspannungszwischenkreise Z1, Z2 der Wechselrichter WR1, WR2 angeschlossenen Gleichstromlast 2.

Die Schalter $S_{U\_WR1}$, $S_{V\_WR1}$, $S_{W\_WR1}$ sind jeweils als eine Schalteinheit ausgeführt, die eine Halbbrücke 3 mit einem ersten Schaltelement 5 und einem zweiten Schaltelement 7 aufweist. Die Schaltelemente 5, 7 sind beispielsweise jeweils als ein Bipolartransistor mit isolierter Gate-Elektrode (IGBT = Insulated-Gate Bipolar Transistor) und einer antiparallel geschalteten Diode ausgeführt. Der erste Schaltzustand jedes Schalters $S_{U\_WR1}$, $S_{V\_WR1}$, $S_{W\_WR1}$ wird durch Schließen des ersten Schaltelements 5 und Öffnen des zweiten Schaltelements 7 hergestellt, der zweite Schaltzustand wird durch Öffnen des ersten Schaltelements 5 und Schließen des zweiten Schaltelements 7 hergestellt.

Die Regelungsvorrichtung 1 umfasst eine Strommessvorrichtung 9 zur Erfassung der Istwerte der Phasenströme $i_{U\_WR1}$, $i_{V\_WR1}$, $i_{W\_WR1}$ des Wechselrichters WR1 und eine Hysteresestromregelvorrichtung 11, mit der aus den erfassten Istwerten der Phasenströme $i_{U\_WR1}$, $i_{V\_WR1}$, $i_{W\_WR1}$ in unten näher beschriebener Weise Schaltsignale $Y_{U\_WR1}$, $Y_{V\_WR1}$, $Y_{W\_WR1}$ für die Phasen des Wechselrichters WR1, WR2 erzeugt werden, mit denen die Schalter $S_{U\_WR1}$, $S_{V\_WR1}$, $S_{W\_WR1}$, d. h. in dem in FIG 2 dargestellten Ausführungsbeispiel die Schaltelemente 5, 7 angesteuert werden.

FIG 2 zeigt beispielhaft eine Situation, in der ein Nullsystemstrom $i_{0\_WR1}$ des Wechselrichters WR1 als ein Kreisstrom $i_K$ über einen Sternpunkt 13 des Netzes N, eine erste Kopplung 15, einen Erdleiter 17 und eine zweite Kopplung 19 zu einer mit dem Wechselrichter WR1 verbundenen Gleichstromlast 2 fließt. Die Kopplungen 15, 19 sind nur schematisch dargestellt und können beispielsweise parasitäre Elemente und/oder galvanische Verbindungen sein.

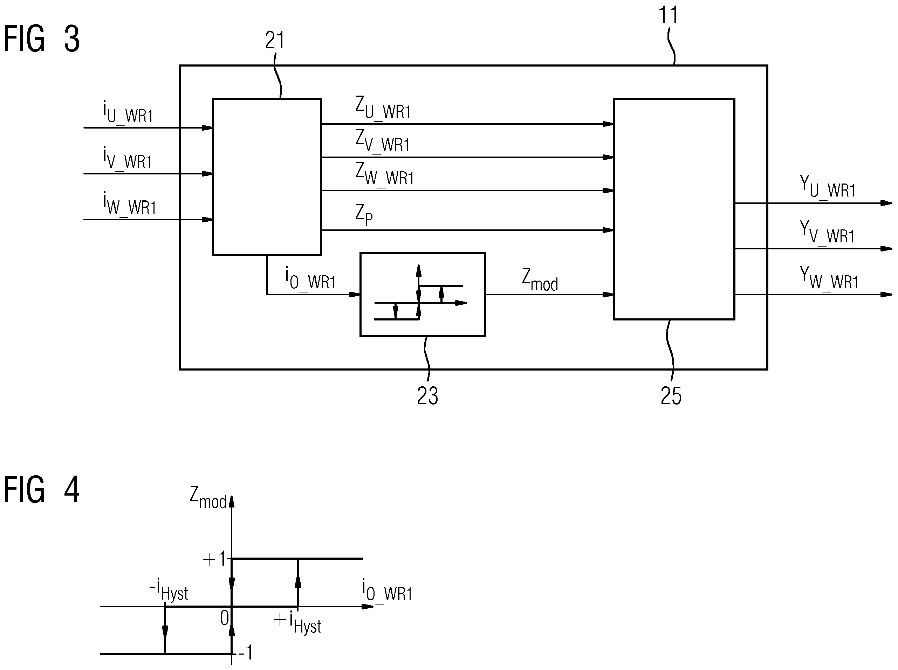

Die Phasenströme $I_{U\_WR1}$, $i_{V\_WR1}$, $i_{W\_WR1}$ des Wechselrichters WR1 werden durch die Hysteresestromregelvorrichtung 11 mit einer direkten Hysteresestromregelung geregelt, die eine Reduzierung des Nullsystemstroms $i_{0\_WR1}$ des Wechselrichters WR1 einschließt. Diese Regelung wird anhand der Figuren 3 und 4 beschrieben.

FIG 3 zeigt schematisch den Aufbau und die Funktionsweise der Hysteresestromregelvorrichtung 11. Ein erster Hystereseregler 21 erzeugt aus den von der Strommessvorrichtung 9 erfassten Istwerten der Phasenströme $i_{U\_WR1}$, $i_{V\_WR1}$, $i_{W\_WR1}$ Standardschaltsignale $Z_{U\_WR1}$, $Z_{V\_WR1}$, $Z_{W\_WR1}$ für die Schalter $S_{U\_WR1}$, $S_{V\_WR1}$, $S_{W\_WR1}$ des Wechselrichters WR1 gemäß einer herkömmlichen direkten Hysteresestromregelung, vorzugsweise einer SDHC-Stromregelung. Die Standardschaltsignale $Z_{U\_WR1}$, $Z_{V\_WR1}$, $Z_{W\_WR1}$ werden einer Schaltlogik 25 zugeführt. Jedes Standardschaltsignal $Z_{U\_WR1}$, $Z_{V\_WR1}$, $Z_{W\_WR1}$ hat den Wertebereich {-1,+1}, wobei der Wert +1 dem ersten Schaltzustand und der Wert -1 dem zweiten Schaltzustand des jeweiligen Schalters $S_{U\_WR1}$, $S_{V\_WR1}$, $S_{W\_WR1}$ entspricht. Ferner ermittelt der erste Hystereseregler 21 in unten näher beschriebener Weise genau eine Phase des Wechselrichters WR1, die in Abhängigkeit von dem Nullsystemstrom $i_{0\text{-}WR1}$, des Wechselrichters WR1 geschaltet wird. Die jeweils ermittelte Phase wird der Schaltlogik 25 in Form eines Phasenauswahlsignals $Z_P$ mitgeteilt und wird im Folgenden als die ausgewählte Phase bezeichnet.

Ein zweiter Hystereseregler 23 prüft, ob der Nullsystemstrom $i_{0\_WR1}$ ein erstes Hysteresefenster verlässt, und erzeugt ein vom Ergebnis dieser Prüfung abhängiges Zusatzschaltsignal $Z_{mod}$, das er der Schaltlogik 25 zuführt. Der Istwert des Nullsystemstroms $i_{0\_WR1}$ wird dabei beispielsweise von dem ersten Hystereseregler 21 ermittelt und dem zweiten Hystereseregler 23 zugeführt.

FIG 4 zeigt die Funktionsweise des zweiten Hysteresereglers 23 anhand eines Hysteresediagramms für den Nullsystemstrom $i_{0\_WR1}$. Das erste Hysteresefenster ist ein Intervall zwischen einer negativen Intervallgrenze $-i_{Hyst}$ und einer positiven Intervallgrenze $+i_{Hyst}$. Wenn der Nullsystemstrom $i_{0\_WR1}$ größer als die positive Intervallgrenze $+i_{Hyst}$ ist, wird das Zusatzschaltsignal $Z_{mod}$ auf den Wert +1 gesetzt. Wenn der Nullsystemstrom $i_{0\_WR1}$ kleiner als die negative Intervallgrenze $-i_{Hyst}$ ist, wird das Zusatzschaltsignal $Z_{mod}$ auf den Wert -1 gesetzt. Wenn der Nullsystemstrom $i_{0\_WR1}$ den Wert Null über- oder unterschreitet, wird das Zusatzschaltsignal $Z_{mod}$ jeweils auf den Wert 0 gesetzt. Zwischen dem Wert 0 und der positiven Intervallgrenze $+i_{Hyst}$ sowie zwischen dem Wert 0 und der negativen Intervallgrenze $-i_{Hyst}$ bleibt das Zusatzschaltsignal $Z_{mod}$ jeweils unverändert.

Die Schaltlogik 25 erzeugt aus den Standardschaltsignalen $Z_{U\_WR1}$, $Z_{V\_WR1}$, $Z_{W\_WR1}$, dem Phasenauswahlsignal $Z_P$ und dem Zusatzschaltsignal $Z_{mod}$ die von der Hysteresestromregelvorrichtung 11 ausgegebenen Schaltsignale $Y_{U\_WR1}$, $Y_{V\_WR1}$, $Y_{W\_WR1}$. Das Schaltsignal $Y_{U\_WR1}$, $Y_{V\_WR1}$, $Y_{W\_WR1}$ für die ausgewählte Phase wird dabei auf den Wert -1 gesetzt, wenn das Zusatzschaltsignal $Z_{mod}$ den Wert +1 annimmt, auf den Wert +1 gesetzt, wenn das Zusatzschaltsignal $Z_{mod}$ den Wert -1 annimmt, und stimmt andernfalls mit dem Standardschaltsignal $Z_{U\_WR1}$, $Z_{V\_WR1}$, $Z_{W\_WR1}$ für die ausgewählte Phase überein. Die Schaltsignale $Y_{U\_WR1}$, $Y_{V\_WR1}$, $Y_{W\_WR1}$ für die anderen beiden Phasen stimmen jeweils mit dem Standardschaltsignal $Z_{U\_WR1}$, $Z_{V\_WR1}$, $Z_{W\_WR1}$ für die jeweilige Phase überein. Wenn also beispielsweise die Phase U die ausgewählte Phase ist, werden von der Hysteresestromregelvorrichtung 11 folgende Schaltsignale $Y_{U\_WR1}$, $Y_{V\_WR1}$, $Y_{W\_WR1}$ ausgegeben:

$$Y_{U\_WR1} = \begin{cases} -1 & \textit{falls } Z_{mod} = 1 \\ +1 & \textit{falls } Z_{mod} = -1 \\ Z_{U\_WR1} & \textit{falls } Z_{mod} = 0 \end{cases}, \quad Y_{V\_WR1} = Z_{V\_WR1}, \quad Y_{W\_WR1} = Z_{W\_WR1}.$$

Die ausgewählte Phase wird beispielsweise in Abhängigkeit von einer Phasenlage der Ausgangsspannungen gewechselt. Beispielsweise wird als die ausgewählte Phase jeweils die Phase mit der momentan betragsmäßig größten Ausgangsspannung des Wechselrichters WR1 verwendet. Dadurch wird ein statorfestes Koordinatensystem für Raumzeiger der Phasenströme $i_{U\_WR1}$, $i_{V\_WR1}$, $i_{W\_WR1}$ in Sektoren von jeweils 60 Grad aufgeteilt, wobei in einander benachbarten Sektoren jeweils eine andere Phase die ausgewählte Phase ist.

Vorzugsweise wird ferner zur Erzeugung der Standardschaltsignale $Z_{U\_WR1}$, $Z_{V\_WR1}$, $Z_{W\_WR1}$ eine Hysteresestromregelung mit einem Flat-Top-Verhalten verwendet, bei der in jeder Taktperiode der Regelung eine Phase des Wechselrichters WR1 nicht geschaltet wird. Vorzugsweise wird dabei jeweils genau diese Phase als ausgewählte Phase verwendet. Dadurch wird die jeweils ausgewählte Phase nur dann geschaltet, wenn der Nullsystemstrom $i_{0\_WR1}$ das erste Hysteresefenster verlässt.

Die Ausregelung des Nullsystemstroms $i_{0\_WR1}$ ermöglicht die Dämpfung von Kreisströmen $i_K$ der in FIG 2 dargestellten Art, die zu Systemschwingungen führen können.

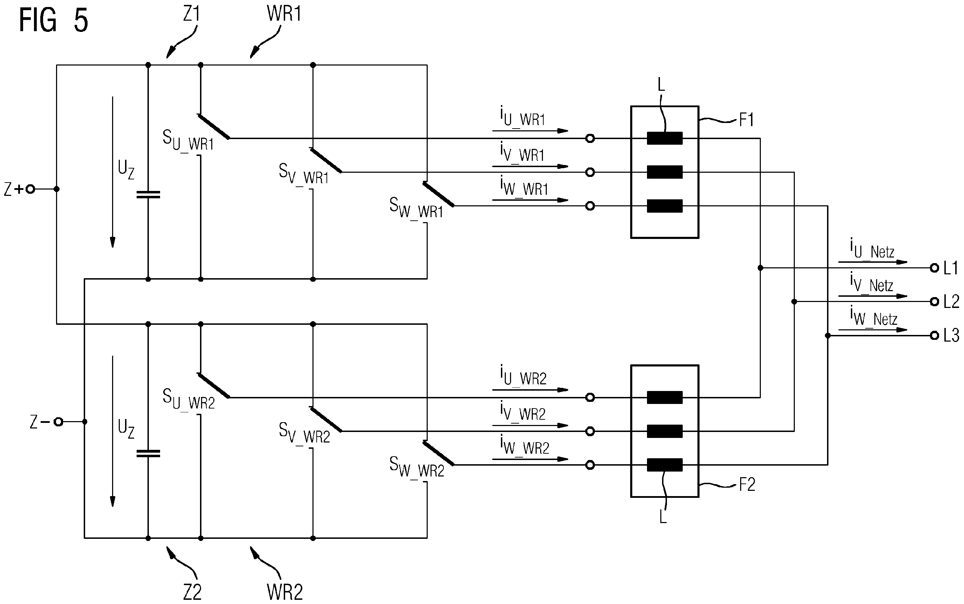

FIG 5 zeigt ein Ersatzschaltbild zweier parallel geschalteter dreiphasiger Wechselrichter WR1, WR2.

Jeder Wechselrichter WR1, WR2 weist eingangsseitig einen Gleichspannungszwischenkreis Z1, Z2 mit einem positiven Zwischenkreispotential Z+, einem negativen Zwischenkreispotential Z- und einer Zwischenkreisspannung $U_Z$, die die Differenz dieser Zwischenkreispotentiale Z+, Z- ist, auf. Die Gleichspannungszwischenkreise Z1, Z2 der Wechselrichter WR1, WR2 sind parallel geschaltet, so dass sie dasselbe positive Zwischenkreispotential Z+, dasselbe negative Zwischenkreispotential Z- und dieselbe Zwischenkreisspannung $U_Z$ aufweisen.

Ferner umfasst jeder Wechselrichter WR1, WR2 für jede seiner Phasen einen Schalter $S_{U\_WR1}$, $S_{V\_WR1}$, $S_{W\_WR1}$, $S_{U\_WR2}$, $S_{V\_WR2}$, $S_{W\_WR2}$ mit einem ersten Schaltzustand, der ein Phasenpotential der Phase auf das positive Zwischenkreispotential Z+ legt, und einem zweiten Schaltzustand, der das Phasenpotential der Phase auf das negative Zwischenkreispotential Z- legt.

Jeder Wechselrichter WR1, WR2 ist ausgangsseitig über einen eigenen Filter F1, F2 an ein Netz N gekoppelt. Die Filter F1, F2 weisen jeweils für jede Phase des jeweiligen Wechselrichters WR1, WR2 mindestens eine Induktivität L auf. Die beiden zueinander korrespondierenden Phasen der beiden Wechselrichter WR1, WR2 sind ausgangsseitig zusammengeschaltet und mit einer gemeinsamen netzseitigen Anschlussklemme L1, L2, L3 verbunden, so dass sich die beiden Phasenströme $i_{U\_WR1}$, $i_{V\_WR1}$, $i_{W\_WR1}$, $i_{U\_WR2}$, $i_{V\_WR2}$, $i_{W\_WR2}$ dieser Phasen der beiden Wechselrichter WR1, WR2 zu einem Phasennetzstrom $i_{U\_Netz}$, $i_{V\_Netz}$, $i_{W\_Netz}$ addieren, der über die mit diesen Phasen verbundene Anschlussklemme L1, L2, L3 ausgegeben wird.

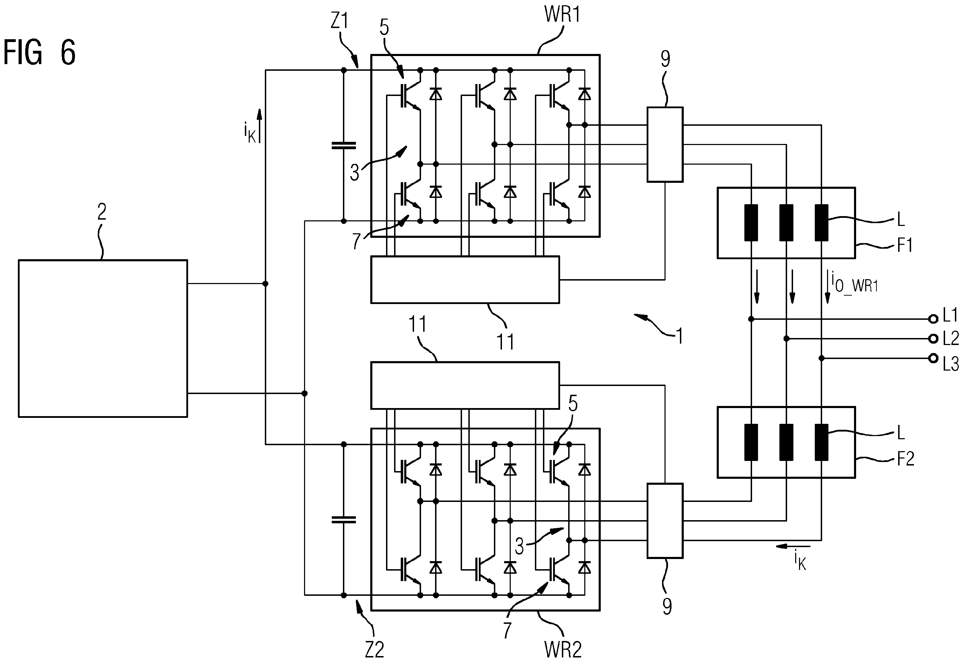

FIG 6 zeigt einen Schaltplan eines konkreten Ausführungsbeispiels zweier gemäß FIG 5 parallel geschalteter dreiphasiger Wechselrichter WR1, WR2 sowie einer Regelungsvorrichtung 1 zur Regelung der Phasenströme $i_{U\_WR1}$, $i_{V\_WR1}$, $i_{W\_WR1}$, $i_{U\_WR2}$, $i_{V\_WR2}$, $i_{W\_WR2}$ der Wechselrichter WR1, WR2. An die Gleichspannungszwischenkreise Z1, Z2 der Wechselrichter WR1, WR2 ist eine Gleichstromlast 2 angeschlossen.

Die Schalter $S_{u\_WR1}$, $S_{V\_WR1}$, $S_{W\_WR1}$, $S_{U\_WR2}$, $S_{V\_WR2}$, $S_{W\_WR2}$ sind jeweils als eine Halbbrücke 3 mit einem ersten Schaltelement 5 und einem zweiten Schaltelement 7 ausgeführt. Die Schaltelemente 5, 7 sind beispielsweise jeweils als ein IGBT mit einer dazu antiparallel geschalteten Diode ausgeführt. Der erste Schaltzustand jedes Schalters $S_{U\_WR1}$, $S_{V\_WR1}$, $S_{W\_WR1}$, $S_{U\_WR2}$, $S_{V\_WR2}$, $S_{W\_WR2}$ wird durch Schließen des ersten Schaltelements 5 und Öffnen des zweiten Schaltelements 7 hergestellt, der zweite Schaltzustand wird durch Öffnen des ersten Schaltelements 5 und Schließen des zweiten Schaltelements 7 hergestellt.

FIG 6 zeigt beispielhaft eine Situation, in der ein Nullsystemstrom $i_{0\_WR1}$ eines ersten Wechselrichters WR1 als ein Kreisstrom $i_K$ über die Gleichspannungszwischenkreise Z1, Z2 zwischen den Wechselrichtern WR1, WR2 fließt. In dem in FIG 6 gezeigten Fall fließt der Kreisstrom $i_K$ durch den zweiten Wechselrichter WR2 vollständig über die Phase W und hat den dreifachen Wert des Nullsystemstroms $i_{0\_WR1}$ des ersten Wechselrichters WR1.

Die Regelungsvorrichtung 1 umfasst für jeden Wechselrichter WR1, WR2 eine Strommessvorrichtung 9 zur Erfassung der Istwerte der Phasenströme $i_{U\_WR1}$, $i_{V\_WR1}$, $i_{W\_WR1}$, $i_{U\_WR2}$, $i_{V\_WR2}$, $i_{W\_WR2}$ des Wechselrichters WR1, WR2 und eine Hysteresestromregelvorrichtung 11, die aus den erfassten Istwerten der Phasenströme $i_{U\_WR1}$, $i_{V\_WR1}$, $i_{W\_WR1}$, $i_{U\_WR2}$, $i_{V\_WR2}$, $i_{W\_WR2}$ Schaltsignale $Y_{U\_WR1}$, $Y_{V\_WR1}$, $Y_{W\_WR1}$, $Y_{U\_WR2}$, $Y_{V\_WR2}$, $Y_{N\_WR2}$ für die Phasen des Wechselrichters WR1, WR2 erzeugt, mit denen die Schalter $S_{U\_WR1}$, $S_{V\_WR1}$, $S_{W\_WR1}$, $S_{U\_WR2}$, $S_{V\_WR2}$, $S_{W\_WR2}$, d. h. in dem in FIG 6 dargestellten Ausführungsbeispiel die Schaltelemente 5, 7 angesteuert werden.

Jede Hysteresestromregelvorrichtung 11 ist dabei wie in FIG 3 ausgebildet. Ein erster Hystereseregler 21 erzeugt aus den Istwerten der Phasenströme $i_{U\_WR1}$, $i_{V\_WR1}$, $i_{W\_WR1}$, $i_{U\_WR2}$, $i_{V\_WR2}$, $i_{W\_WR2}$ des jeweiligen Wechselrichters WR1, WR2 Standardschaltsignale $Z_{U\_WR1}$, $Z_{V\_WR1}$, $Z_{W\_WR1}$, $Z_{U\_WR2}$, $Z_{V\_WR2}$, $Z_{W\_WR2}$ für die Schalter $S_{U\_WR1}$, $S_{V\_WR1}$, $S_{W\_WR1}$, $S_{U\_WR2}$, $S_{V\_WR2}$, $S_{W\_WR2}$ des Wechselrichters WR1, WR2 gemäß einer herkömmlichen direkten Hysteresestromregelung, die wiederum vorzugsweise eine Hysteresestromregelung mit einem Flat-Top-Verhalten und insbesondere eine SDHC-Stromregelung ist. Ein zweiter Hystereseregler 23 erzeugt für einen ausgewählten Phasenstrom $i_{U\_WR1}$, $i_{V\_WR1}$, $i_{W\_WR1}$, $i_{U-WR2}$, $i_{V\_WR2}$, $i_{W\_WR2}$ des jeweiligen Wechselrichters WR1, WR2 ein Zusatzschaltsignal $Z_{mod}$, wie oben anhand von FIG 4 beschrieben wurde. Eine Schaltlogik 25 erzeugt wiederum aus den Standardschaltsignalen $Z_{U\_WR1}$, $Z_{V\_WR1}$, $Z_{W\_WR1}$, $Z_{U\_WR2}$, $Z_{V\_WR2}$, $Z_{W\_WR2}$ und dem Zusatzschaltsignal $Z_{mod}$ die von der Hysteresestromregelvorrichtung 11 ausgegebenen Schaltsignale $Y_{U\_WR1}$, $Y_{V\_WR1}$, $Y_{W\_WR1}$, $Y_{U\_WR2}$, $Y_{V\_WR2}$, $Y_{W\_WR2}$ in der oben anhand der Figuren 3 und 4 beschriebenen Weise.

Die Standardschaltsignale $Z_{U\_WR1}$, $Z_{V\_WR1}$, $Z_{W\_WR1}$, $Z_{U\_WR2}$, $Z_{V\_WR2}$, $Z_{W\_WR2}$ werden für jeden Wechselrichter WR1, WR2 von dem jeweiligen ersten Hystereseregler 21 unabhängig von den Istwerten der Phasenströme $i_{U\_WR1}$, $i_{V\_WR1}$, $i_{W\_WR1}$, $i_{U\_WR2}$, $i_{V\_WR2}$, $i_{W\_WR2}$ des jeweils anderen Wechselrichters WR1, WR2 gebildet. Dabei wird aus den Istwerten der Phasenströme $i_{U\_WR1}$, $i_{V\_WR1}$, $i_{W\_WR1}$, $i_{U\_WR2}$, $i_{V\_WR2}$, $i_{W\_WR2}$ jedes Wechselrichters WR1, WR2 in unten näher beschriebener Weise in einem statorfesten Koordinatensystem ein Iststromraumzeiger gebildet. Der Iststromraumzeiger wird innerhalb eines zweiten Hysteresefensters um einen Sollstromraumzeiger gehalten. Für beide Wechselrichter WR1, WR2 wird beispielsweise zu jedem Zeitpunkt derselbe Sollstromraumzeiger verwendet.

Der Iststromraumzeiger des ersten Wechselrichters WR1 wird aus den Stromstärken aller drei Phasenströme $i_{U\_WR1}$, $i_{V\_WR1}$, $i_{W\_WR1}$ des ersten Wechselrichters WR1 gemäß folgender Gleichung [1] gebildet, die eine herkömmliche Clarke-Transformation ist, wobei $i_{0\_WR1}$, den Nullsystemstrom des ersten Wechselrichters WR1 bezeichnet:

$$\begin{pmatrix} i_{\alpha\_WR1} \\ i_{\beta\_WR1} \\ i_{0\_WR1} \end{pmatrix} = \frac{1}{3} \begin{pmatrix} 2 & -1 & -1 \\ 0 & \sqrt{3} & -\sqrt{3} \\ 1 & 1 & 1 \end{pmatrix} * \begin{pmatrix} i_{U\_WR1} \\ i_{V\_WR1} \\ i_{W\_WR1} \end{pmatrix}. \qquad [1]$$

Der Iststromraumzeiger des zweiten Wechselrichters WR2 wird vorzugsweise im Unterschied dazu zu jedem Zeitpunkt aus nur genau zwei der drei Phasenströme $i_{U\_WR2}$, $i_{V\_WR2}$, $i_{W\_WR2}$ des zweiten Wechselrichters WR2 gemäß einer der folgenden Gleichungen [2] bis [4] gebildet:

$$\begin{pmatrix} i_{\alpha\_WR2} \\ i_{\beta\_WR2} \\ i_{0\_WR2} \end{pmatrix}^{*} = \frac{1}{3}\begin{pmatrix} 3 & 0 & 0 \\ \sqrt{3} & 2\sqrt{3} & 0 \\ 0 & 0 & 0 \end{pmatrix} * \begin{pmatrix} i_{U\_WR2} \\ i_{V\_WR2} \\ i_{W\_WR2} \end{pmatrix}, \qquad [2]$$

$$\begin{pmatrix} i_{\alpha\_WR2} \\ i_{\beta\_WR2} \\ i_{0\_WR2} \end{pmatrix}^{**} = \frac{1}{3}\begin{pmatrix} 0 & -3 & -3 \\ 0 & \sqrt{3} & -\sqrt{3} \\ 0 & 0 & 0 \end{pmatrix} * \begin{pmatrix} i_{U\_WR2} \\ i_{V\_WR2} \\ i_{W\_WR2} \end{pmatrix}, \qquad [3]$$

$$\begin{pmatrix} i_{\alpha\_WR2} \\ i_{\beta\_WR2} \\ i_{0\_WR2} \end{pmatrix}^{***} = \frac{1}{3}\begin{pmatrix} 3 & 0 & 0 \\ -\sqrt{3} & 0 & -2\sqrt{3} \\ 0 & 0 & 0 \end{pmatrix} * \begin{pmatrix} i_{U\_WR2} \\ i_{V\_WR2} \\ i_{W\_WR2} \end{pmatrix}, \qquad [4]$$

wobei die jeweils gewählte Gleichung der Gleichungen [2] bis [4] variiert, d. h. zu aufeinander folgenden Zeitpunkten gewechselt wird. Jede der Gleichungen [2] bis [4] ist eine Clarke-Transformation, bei der jeweils ein Phasenstrom $i_{U\_WR2}$, $i_{V\_WR2}$, $i_{W\_WR2}$ aus den beiden anderen Phasenströmen $i_{U\_WR2}$, $i_{V\_WR2}$, $i_{W\_WR2}$ des zweiten Wechselrichters WR2 unter der Annahme berechnet wurde, dass sich die drei Phasenströme $i_{U\_WR2}$, $i_{V\_WR2}$, $i_{W\_WR2}$ zu Null addieren, d. h. unter Annahme, dass der Nullsystemstrom des zweiten Wechselrichters WR2 verschwindet, obwohl dies im allgemeinen tatsächlich nicht der Fall ist.

Bei der Bildung des Iststromraumzeigers des zweiten Wechselrichters WR2 gemäß einer der Gleichungen [2] bis [4] wird also jeweils einer der Phasenströme $i_{U\_WR2}$, $i_{V\_WR2}$, $i_{W\_WR2}$ nicht verwendet, d. h. der Iststromraumzeiger des zweiten Wechselrichters WR2 wird jeweils nur aus den Istwerten der beiden anderen Phasenströme $i_{U\_WR2}$, $i_{V\_WR2}$, $i_{W\_WR2}$ gebildet. In Gleichung [2] wird der Phasenstrom $i_{W\_WR2}$ nicht zur Bildung des Iststromraumzeigers verwendet, in Gleichung [3] der Phasenstrom $i_{U\_WR2}$ und in Gleichung [4] der Phasenstrom $i_{V\_WR2}$. Vorzugsweise wird diejenige Phase, deren Phasenstrom $i_{U\_WR2}$, $i_{V\text{-}WR2}$, $i_{W\_WR2}$ zur Bildung des Iststromraumzeigers des zweiten Wechselrichters WR2 nicht verwendet wird, als ausgewählte Phase des zweiten Wechselrichters WR2 verwendet. Wenn die Hysteresestromregelung, die zur Bildung der Standardschaltsignale $Z_{U\_WR1}$, $Z_{V\_WR1}$, $Z_{W\_WR1}$, $Z_{U\_WR2}$, $Z_{V\_WR2}$, $Z_{W\_WR2}$ verwendet wird, ein Flat-Top-Verhalten vorsieht, wird ferner vorzugsweise jeweils diejenige Phase, die gemäß dem Flat-Top-Verhalten nicht zu schalten ist, als die Phase verwendet, deren Phasenstrom $i_{U\_WR2}$, $i_{V\_WR2}$, $i_{W\_WR2}$ zur Bildung des Iststromraumzeigers des zweiten Wechselrichters WR2 nicht verwendet wird.

Durch die Bildung des Iststromraumzeigers des zweiten Wechselrichters WR2 gemäß einer der Gleichungen [2] bis [4] werden die beiden Phasenströme $i_{U\_WR2}$, $i_{V\_WR2}$, $i_{W\_WR2}$, aus denen der Iststromraumzeiger jeweils gebildet wird, auf ihre Sollwerte geregelt, auch wenn ein Nullsystemstrom des zweiten Wechselrichters WR2 nicht verschwindet. Der jeweilige dritte Phasenstrom $i_{U\_WR2}$, $i_{V\_WR2}$, $i_{W\_WR2}$ wird zwar bei einem nicht verschwindenden Nullsystemstrom des zweiten Wechselrichters WR2 nicht auf seinen Sollwert geregelt. Jedoch wird durch das permanente Wechseln derjenigen Phasenströme $i_{U\_WR2}$, $i_{V\_WR2}$, $i_{W\_WR2}$, aus denen der Iststromraumzeiger des zweiten Wechselrichters WR2 jeweils gebildet wird, erreicht, dass alle drei Phasenströme $i_{U\_WR2}$, $i_{V\_WR2}$, $i_{W\_WR2}$ nach einer kurzen Einschwingphase der Regelung wenigstens annähernd (innerhalb des zweiten Hysteresefensters) ihren Sollwerten entsprechen. Nullströme des zweiten Wechselrichters WR2 und Kreisströme $i_K$ durch den zweiten Wechselrichter WR2 bleiben daher zwischen den Wechseln derjenigen Phase, deren Phasenstrom $i_{U\_WR2}$, $i_{V\_WR2}$, $i_{W\_WR2}$ nicht zur Bildung des Iststromraumzeigers des zweiten Wechselrichters WR2 verwendet wird, annähernd konstant und werden durch die Wechsel dieser Phase ausgeregelt. Durch die oben beschriebene zusätzliche Schaltung der jeweils ausgewählten Phase des zweiten Wechselrichters WR2 in Abhängigkeit von dessen Nullsystemstrom wird der Nullsystemstrom auch zwischen Wechseln der Phase, deren Phasenstrom $i_{U\_WR2}$, $i_{V\_WR2}$, $i_{W\_WR2}$ nicht zur Bildung des Iststromraumzeigers des zweiten Wechselrichters WR2 verwendet wird, ausgeregelt. Ferner wird durch die oben beschriebene zusätzliche Schaltung der jeweils ausgewählten Phase des ersten Wechselrichters WR1 in Abhängigkeit von dessen Nullsystemstrom $i_{0\_WR1}$ auch dieser Nullsystemstrom $i_{0\text{-}WR1}$, ausgeregelt.

Die oben anhand der Figuren 5 und 6 beispielhaft für zwei Wechselrichter WR1, WR2 beschriebene Stromregelung kann analog für mehr als zwei parallel geschaltete dreiphasige Wechselrichter WR1, WR2 angewendet werden, wobei einer der Wechselrichter WR1, WR2 wie der erste Wechselrichter WR1 der oben beschriebenen Regelung geregelt wird und jeder weitere Wechselrichter WR1, WR2 wie der zweite Wechselrichter WR2 der oben beschriebenen Regelung geregelt wird. Die oben beschriebene Stromregelung kann ferner in analoger Weise statt für Zwei-Level-Wechselrichter, deren Schalter $S_{U\_WR1}$, $S_{V\_WR1}$, $S_{W\_WR1}$, $S_{U\_WR2}$, $S_{V\_WR2}$, $S_{W\_WR2}$ nur zwei Schaltzustände aufweisen, auch für Multi-Level-Stromrichter, deren Schalter $S_{U\_WR1}$, $S_{V\_WR1}$, $S_{W\_WR1}$, $S_{U\_WR2}$, $S_{V\_WR2}$, $S_{W\_WR2}$ mehr als zwei Schaltzustände aufweisen, verwendet werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der vorliegenden Ansprüche zu verlassen.

**Patentansprüche**

1. Verfahren zur Regelung von Phasenströmen ($i_{U\_WR1}$, $i_{V\_WR1}$, $i_{W\_WR1}$) eines dreiphasigen Wechselrichters (WR1), wobei

   - die Phasenströme ($i_{U\_WR1}$, $i_{V\_WR1}$, $i_{W\_WR1}$) des Wechselrichters (WR1) mit einer direkten Hysteresestromregelung durch Schaltsignale ($Y_{U\_WR1}$, $Y_{V\_WR1}$, $Y_{W\_WR1}$), die jeweils den Wertebereich {-1,+1} haben, geregelt werden,

   **dadurch gekennzeichnet, dass**

   - eine ausgewählte Phase des Wechselrichters (WR1) in Abhängigkeit von einem Nullsystemstrom ($i_{0\_WR1}$) des Wechselrichters (WR1) geschaltet wird,
   - wobei ein erstes Hysteresefenster für den Nullsystemstrom ($i_{0\_WR1}$) mit einer negativen Intervallgrenze ($-i_{Hyst}$) und einer positiven Intervallgrenze ($+i_{Hyst}$) vorgegeben wird,
   - ein Zusatzschaltsignal ($Z_{mod}$) auf den Wert +1 gesetzt wird, wenn der Nullsystemstrom ($i_{0\_WR1}$) größer als die positive Intervallgrenze ($+i_{Hyst}$) ist, auf den Wert -1 gesetzt wird, wenn der Nullsystemstrom ($i_{0\_WR1}$) kleiner als die negative Intervallgrenze ($-i_{Hyst}$) ist, und jeweils auf den Wert 0 gesetzt wird, wenn der Nullsystemstrom ($i_{0\_WR1}$) den Wert Null über- oder unterschreitet,
   - das Schaltsignal ($Y_{U\_WR1}$, $Y_{V\_WR1}$, $Y_{W\_WR1}$) für die ausgewählte Phase auf den Wert -1 gesetzt wird, wenn das Zusatzschaltsignal ($Z_{mod}$) den Wert +1 annimmt, auf den Wert +1 gesetzt wird, wenn das Zusatzschaltsignal ($Z_{mod}$) den Wert -1 annimmt, und andernfalls mit einem Standardschaltsignal ($Z_{U\_WR1}$, $Z_{V\_WR1}$, $Z_{W\_WR1}$) der Hysteresestromregelung für die ausgewählte Phase übereinstimmt und
   - die Schaltsignale ($Y_{U\_WR1}$, $Y_{V\_WR1}$, $Y_{W\_WR1}$) für die anderen beiden Phasen jeweils mit dem Standardschaltsignal ($Z_{U\_WR1}$, $Z_{V\_WR1}$, $Z_{W\_WR1}$) für die jeweilige Phase übereinstimmen.

2. Verfahren nach Anspruch 1,
   **dadurch gekennzeichnet, dass** die ausgewählte Phase in Abhängigkeit von einer Phasenlage von Ausgangsspannungen des Wechselrichters (WR1) gewechselt wird.

3. Verfahren nach einem der vorhergehenden Ansprüche,
   **dadurch gekennzeichnet, dass** als die ausgewählte Phase jeweils die Phase mit der betragsmäßig größten Ausgangsspannung des Wechselrichters (WR1) verwendet wird.

4. Verfahren nach einem der vorhergehenden Ansprüche,
   **dadurch gekennzeichnet, dass** als Hysteresestromregelung eine SDHC-Stromregelung verwendet wird.

5. Verfahren zur Regelung von Phasenströmen ($i_{U\_WR1}$, $i_{V\_WR1}$, $i_{W\_WR1}$, $i_{U\_WR2}$, $i_{V\_WR2}$, $i_{W\_WR2}$) mehrerer parallel geschalteter dreiphasiger Wechselrichter (WR1, WR2), wobei die Phasenströme ($i_{U\_WR1}$, $i_{V\_WR1}$, $i_{W\_WR1}$, $i_{U\_WR2}$, $i_{V\_WR2}$, $i_{W\_WR2}$) jedes Wechselrichters (WR1, WR2) mit einem Verfahren gemäß einem der vorhergehenden Ansprüche geregelt werden.

6. Verfahren nach Anspruch 5,
   **dadurch gekennzeichnet, dass**

   - für jeden Wechselrichter (WR1, WR2) ein Iststromraumzeiger für Istwerte der Phasenströme ($i_{U\_WR1}$, $i_{V\_WR1}$, $i_{W\_WR1}$, $i_{U\_WR2}$, $i_{V\_WR2}$, $i_{W\_WR2}$) des Wechselrichters (WR1, WR2) innerhalb eines zweiten Hysteresefensters um einen Sollstromraumzeiger gehalten wird,
   - der Iststromraumzeiger eines ersten Wechselrichters (WR1) aus allen drei Phasenströmen ($i_{U\_WR1}$, $i_{V\_WR1}$, $i_{W\_WR1}$) des ersten Wechselrichters (WR1) gebildet wird
   - und der Iststromraumzeiger jedes weiteren Wechselrichters (WR2) aus genau zwei Phasenströmen ($i_{U\_WR2}$,

$i_{V\_WR2}$, $i_{W\_WR2}$) des Wechselrichters (WR2) unter der Annahme gebildet wird, dass sich alle drei Phasenströme ($i_{U\_WR2}$, $i_{V\_WR2}$, $i_{W\_WR2}$) des Wechselrichters (WR2) zu Null addieren, wobei die Auswahl der beiden Phasenströme ($i_{U\_WR2}$, $i_{V\_WR2}$, $i_{W\_WR2}$) aus denen der Iststromraumzeiger gebildet wird, variiert wird.

7.  Verfahren nach Anspruch 5 oder 6,
    **dadurch gekennzeichnet, dass** die Phasenströme ($i_{U\_WR1}$, $i_{V\_WR1}$, $i_{W\_WR1}$, $i_{U\_WR2}$, $i_{V\_WR2}$, $i_{W\_WR2}$) jedes Wechselrichters (WR1, WR2) unabhängig von den Istwerten der Phasenströme ($i_{U\_WR1}$, $i_{V\_WR1}$, $i_{W\_WR1}$, $i_{U\_WR2}$, $i_{V\_WR2}$, $i_{W\_WR2}$) der anderen Wechselrichter (WR1, WR2) geregelt werden.

8.  Verfahren nach Anspruch 6 oder 7,
    **dadurch gekennzeichnet, dass** für jeden der weiteren Wechselrichter (WR2) als die ausgewählte Phase jeweils diejenige Phase verwendet wird, deren Phasenstrom ($i_{U\_WR2}$, $i_{V\_WR2}$, $i_{W\_WR2}$) nicht zur Bildung des Iststromraumzeigers verwendet wird.

9.  Verfahren nach einem der Ansprüche 6 bis 8,
    **dadurch gekennzeichnet, dass** für alle Wechselrichter (WR1, WR2) zu jedem Zeitpunkt derselbe Sollstromraumzeiger verwendet wird.

10. Verfahren nach einem der Ansprüche 6 bis 9,
    **dadurch gekennzeichnet, dass** jeder Iststromraumzeiger und jeder Sollstromraumzeiger in einem statorfesten Koordinatensystem gebildet werden.

11. Verfahren nach Anspruch 10,
    **dadurch gekennzeichnet, dass** der Iststromraumzeiger des ersten Wechselrichters (WR1) gemäß

$$\begin{pmatrix} i_{\alpha\_WR1} \\ i_{\beta\_WR1} \\ i_{0\_WR1} \end{pmatrix} = \frac{1}{3}\begin{pmatrix} 2 & -1 & -1 \\ 0 & \sqrt{3} & -\sqrt{3} \\ 1 & 1 & 1 \end{pmatrix} * \begin{pmatrix} i_{U\_WR1} \\ i_{V\_WR1} \\ i_{W\_WR1} \end{pmatrix}$$

gebildet wird.

12. Verfahren nach Anspruch 10 oder 11,
    **dadurch gekennzeichnet, dass** der Iststromraumzeiger jedes weiteren Wechselrichters (WR2) in Abhängigkeit von den für seine Bildung verwendeten Phasenströmen ($i_{U\_WR2}$, $i_{V\_WR2}$, $i_{W\_WR2}$) gemäß

$$\begin{pmatrix} i_{\alpha\_WR2} \\ i_{\beta\_WR2} \\ i_{0\_WR2} \end{pmatrix}^{*} = \frac{1}{3}\begin{pmatrix} 3 & 0 & 0 \\ \sqrt{3} & 2\sqrt{3} & 0 \\ 0 & 0 & 0 \end{pmatrix} * \begin{pmatrix} i_{U\_WR2} \\ i_{V\_WR2} \\ i_{W\_WR2} \end{pmatrix}$$

oder gemäß

$$\begin{pmatrix} i_{\alpha\_WR2} \\ i_{\beta\_WR2} \\ i_{0\_WR2} \end{pmatrix}^{**} = \frac{1}{3}\begin{pmatrix} 0 & -3 & -3 \\ 0 & \sqrt{3} & -\sqrt{3} \\ 0 & 0 & 0 \end{pmatrix} * \begin{pmatrix} i_{U\_WR2} \\ i_{V\_WR2} \\ i_{W\_WR2} \end{pmatrix}$$

oder gemäß

$$\begin{pmatrix} i_{\alpha\_WR2} \\ i_{\beta\_WR2} \\ i_{0\_WR2} \end{pmatrix}^{***} = \frac{1}{3}\begin{pmatrix} 3 & 0 & 0 \\ -\sqrt{3} & 0 & -2\sqrt{3} \\ 0 & 0 & 0 \end{pmatrix} * \begin{pmatrix} i_{U\_WR2} \\ i_{V\_WR2} \\ i_{W\_WR2} \end{pmatrix}$$

gebildet wird.

13. Regelungsvorrichtung (1) zur Regelung von Phasenströmen ($i_{U\_WR1}$, $i_{V\_WR1}$, $i_{W\_WR1}$) eines dreiphasigen Wechselrichters (WR1) mit einer direkten Hysteresestromregelung durch Schaltsignale ($Y_{U\_WR1}$, $Y_{V\_WR1}$, $Y_{W\_WR1}$), die jeweils den Wertebereich {-1,+1} haben, die Regelungsvorrichtung (1) umfassend

- eine Strommessvorrichtung (9) zur Erfassung der Istwerte der Phasenströme ($i_{U\_WR1}$, $i_{V\_WR1}$, $i_{W\_WR1}$) des Wechselrichters (WR1),
- eine Hysteresestromregelvorrichtung (11) mit einem ersten Hystereseregler (21) zur Erzeugung von Standardschaltsignalen ($Z_{U\_WR1}$, $Z_{V\_WR1}$, $Z_{W\_WR1}$) für die direkte Hysteresestromregelung der Phasenströme ($i_{U\_WR1}$, $i_{V\_WR1}$, $i_{W\_WR1}$),
- und eine Schaltlogik (25) zur Erzeugung der Schaltsignale ($Y_{U\_WR1}$, $Y_{V\_WR1}$, $Y_{W\_WR1}$),

**dadurch gekennzeichnet, dass**

- die Hysteresestromregelvorrichtung (11) einen zweiten Hystereseregler (23) zur Erzeugung eines Zusatzschaltsignals ($Z_{mod}$) für eine ausgewählte Phase des Wechselrichters (WR1) in Abhängigkeit von einem Nullsystemstrom ($i_{0\_WR1}$) des Wechselrichters (WR1) aufweist, wobei das Zusatzschaltsignal ($Z_{mod}$) auf den Wert +1 gesetzt wird, wenn der Nullsystemstrom ($i_{0\_WR1}$) größer als eine positive Intervallgrenze ($+i_{Hyst}$) eines ersten Hysteresefensters ist, auf den Wert
- 1 gesetzt wird, wenn der Nullsystemstrom ($i_{0\_WR1}$) kleiner als eine negative Intervallgrenze ($-i_{Hyst}$) des ersten Hysteresefensters ist, und jeweils auf den Wert 0 gesetzt wird, wenn der Nullsystemstrom ($i_{0\_WR1}$) den Wert Null über- oder unterschreitet,
- und die Schaltlogik (25) dazu eingerichtet ist, das Schaltsignal ($Y_{U\_WR1}$, $Y_{V\_WR1}$, $Y_{W\_WR1}$) für die ausgewählte Phase auf den Wert -1 zu setzen, wenn das Zusatzschaltsignal ($Z_{mod}$) den Wert +1 annimmt, auf den Wert +1 zu setzen, wenn das Zusatzschaltsignal ($Z_{mod}$) den Wert -1 annimmt, und andernfalls auf das Standardschaltsignal ($Z_{U\_WR1}$, $Z_{V\_WR1}$, $Z_{W\_WR1}$) der Hysteresestromregelung für die ausgewählte Phase zu setzen und die Schaltsignale ($Y_{U\_WR1}$, $Y_{V\_WR1}$, $Y_{W\_WR1}$) für die anderen beiden Phasen jeweils auf das Standardschaltsignal ($Z_{U\_WR1}$, $Z_{V\_WR1}$, $Z_{W\_WR1}$) für die jeweilige Phase zu setzen.

**Claims**

1. Method for controlling phase currents ($i_{U\_WR1}$, $i_{V\_WR1}$, $i_{W\_WR1}$) of a three-phase inverter (WR1), wherein

- the phase currents ($i_{U\_WR1}$, $i_{V\_WR1}$, $i_{W\_WR1}$) of the inverter (WR1) are controlled using direct hysteresis current control by means of switching signals ($Y_{U\_WR1}$, $Y_{V\_WR1}$, $Y_{W\_WR1}$) which each have the value range {-1,+1},

**characterised in that**

- a selected phase of the inverter (WR1) is additionally switched as a function of a zero sequence current ($i_{0\_WR1}$) of the inverter (WR1),
- wherein a first hysteresis window having a negative interval limit ($-i_{Hyst}$) and a positive interval limit ($+i_{Hyst}$) is predefined for the zero sequence current ($i_{0\_WR1}$),
- an additional switching signal ($Z_{mod}$) is set to the value +1 if the zero sequence current ($i_{0\_WR1}$) is greater than the positive interval limit ($+i_{Hyst}$), to the value -1 if the zero sequence current ($i_{0\_WR1}$) is smaller than the negative interval limit ($-i_{Hyst}$), and to the value 0 if the zero sequence current ($i_{0\_WR1}$) exceeds or falls below the value zero in each case,
- the switching signal ($Y_{U\_WR1}$, $Y_{V\_WR1}$, $Y_{W\_WR1}$) for the selected phase is set to the value -1 if the additional switching signal ($Z_{mod}$) assumes the value +1, to the value +1 if the additional switching signal ($Z_{mod}$) assumes the value -1, and otherwise coincides with a standard switching signal ($Z_{U\_WR1}$, $Z_{V\_WR1}$, $Z_{W\_WR1}$) of the hysteresis current control for the selected phase and
- the switching signals ($Y_{U\_WR1}$, $Y_{V\_WR1}$, $Y_{W\_WR1}$) for the other two phases coincide with the standard switching signal ($Z_{U\_WR1}$, $Z_{V\_WR1}$, $Z_{W\_WR1}$) for the respective phase in each case

2. Method according to claim 1,
**characterised in that** the selected phase is changed as a function of a phase relationship of output voltages of the inverter (WR1).

**3.** Method according to one of the preceding claims,
**characterised in that** the phase having the largest output voltage of the inverter (WR1) in absolute value terms is used as the selected phase in each case.

**4.** Method according to one of the preceding claims,
**characterised in that** SDHC current control is used as hysteresis current control.

**5.** Method for controlling phase currents ($i_{U\_WR1}$, $i_{V\_WR1}$, $i_{W\_WR1}$, $i_{U\_WR2}$, $i_{V\_WR2}$, $i_{W\_WR2}$) of a plurality of parallel-connected three-phase inverters (WR1, WR2), wherein the phase currents ($i_{U\_WR1}$, $i_{V\_WR1}$, $i_{W\_WR1}$, $i_{U\_WR2}$, $i_{V\_WR2}$, $i_{W\_WR2}$) of each inverter (WR1, WR2) are controlled using a method according to one of the preceding claims.

**6.** Method according to claim 5,
**characterised in that**

 - for each inverter (WR1, WR2), an actual current space vector for actual values of the phase currents ($i_{U\_WR1}$, $i_{V\_WR1}$, $i_{W\_WR1}$, $i_{U\_WR2}$, $i_{V\_WR2}$, $i_{W\_WR2}$) of the inverter (WR1, WR2) is kept within a second hysteresis window around a setpoint current space vector,
 - the actual current space vector of a first inverter (WR1) is formed from all three phase currents ($i_{U\_WR1}$, $i_{V\_WR1}$, $i_{W\_WR1}$) of the first inverter (WR1)
 - and the actual current space vector of every other inverter (WR2) is formed from just two phase currents ($i_{U\_WR2}$, $i_{V\_WR2}$, $i_{W\_WR2}$) of the inverter (WR2) on the assumption that all three phase currents ($i_{U\_WR2}$, $i_{V\_WR2}$, $i_{W\_WR2}$) of the inverter (WR2) add up to zero, wherein the selection of the two phase currents ($i_{U\_WR2}$, $i_{V\_WR2}$, $i_{W\_WR2}$) from which the actual current space vector is formed is varied.

**7.** Method according to claim 5 or 6,
**characterised in that** the phase currents ($i_{U\_WR1}$, $i_{V\_WR1}$, $i_{W\_WR1}$, $i_{U\_WR2}$, $i_{V\_WR2}$, $i_{W\_WR2}$) of each inverter (WR1, WR2) are controlled independently of the actual values of the phase currents ($i_{U\_WR1}$, $i_{V\_WR1}$, $i_{W\_WR1}$, $i_{U\_WR2}$, $i_{V\_WR2}$, $i_{W\_WR2}$) of the other inverters (WR1, WR2).

**8.** Method according to claim 6 or 7,
**characterised in that**, for each of the other inverters (WR2), the phase whose phase current ($i_{U\_WR2}$, $i_{V\_WR2}$, $i_{W\_WR2}$) is not used to form the actual current space vector is used as the selected phase in each case.

**9.** Method according to one of claims 6 to 8,
**characterised in that** the same setpoint current space vector is used for all the inverters (WR1, WR2) at each point in time.

**10.** Method according to one of claims 6 to 9,
**characterised in that** each actual current space vector and each setpoint current space vector are formed in a stator-fixed coordinate system.

**11.** Method according to claim 10,
**characterised in that** the actual current space vector of the first inverter (WR1) is formed according to

$$\begin{pmatrix} i_{\alpha\_WR1} \\ i_{\beta\_WR1} \\ i_{0\_WR1} \end{pmatrix} = \frac{1}{3}\begin{pmatrix} 2 & -1 & -1 \\ 0 & \sqrt{3} & -\sqrt{3} \\ 1 & 1 & 1 \end{pmatrix} * \begin{pmatrix} i_{U\_WR1} \\ i_{V\_WR1} \\ i_{W\_WR1} \end{pmatrix}$$

**12.** Method according to claim 10 or 11,
**characterised in that** the actual current space vector of every other inverter (WR2) is formed as a function of the phase currents ($i_{U\_WR2}$, $i_{V\_WR2}$, $i_{W\_WR2}$) used for its formation according to

$$\begin{pmatrix} i_{\alpha\_WR2} \\ i_{\beta\_WR2} \\ i_{0\_WR2} \end{pmatrix}^{*} = \frac{1}{3}\begin{pmatrix} 3 & 0 & 0 \\ \sqrt{3} & 2\sqrt{3} & 0 \\ 0 & 0 & 0 \end{pmatrix} * \begin{pmatrix} i_{U\_WR2} \\ i_{V\_WR2} \\ i_{W\_WR2} \end{pmatrix}$$

or according to

$$\begin{pmatrix} i_{\alpha\_WR2} \\ i_{\beta\_WR2} \\ i_{0\_WR2} \end{pmatrix}^{**} = \frac{1}{3}\begin{pmatrix} 0 & -3 & -3 \\ 0 & \sqrt{3} & -\sqrt{3} \\ 0 & 0 & 0 \end{pmatrix} * \begin{pmatrix} i_{U\_WR2} \\ i_{V\_WR2} \\ i_{W\_WR2} \end{pmatrix}$$

or according to

$$\begin{pmatrix} i_{\alpha\_WR2} \\ i_{\beta\_WR2} \\ i_{0\_WR2} \end{pmatrix}^{***} = \frac{1}{3}\begin{pmatrix} 3 & 0 & 0 \\ -\sqrt{3} & 0 & -2\sqrt{3} \\ 0 & 0 & 0 \end{pmatrix} * \begin{pmatrix} i_{U\_WR2} \\ i_{V\_WR2} \\ i_{W\_WR2} \end{pmatrix}$$

**13.** Control device (1) for controlling phase currents ($i_{U\_WR1}$, $i_{V\_WR1}$, $i_{W\_WR1}$) of a three-phase inverter (WR1) using direct hysteresis current control by means of switching signals ($Y_{U\_WR1}$, $Y_{V\_WR1}$, $Y_{W\_WR1}$) which each have the value range {-1,+1}, said control device (1) comprising

- a current measuring device (9) for acquiring the actual values of the phase currents ($i_{U\_WR1}$, $i_{V\_WR1}$, $i_{W\_WR1}$) of the inverter (WR1),
- a hysteresis current control device (11) comprising a first hysteresis controller (21) for generating standard switching signals ($Z_{U\_WR1}$, $Z_{V\_WR1}$, $Z_{W\_WR1}$) for direct hysteresis current control of the phase currents ($i_{U\_WR1}$, $i_{V\_WR1}$, $i_{W\_WR1}$),
- and a switching logic circuit (25) for generating the switching signals ($Y_{U\_WR1}$, $Y_{V\_WR1}$, $Y_{W\_WR1}$),

**characterised in that**

- the hysteresis current control device (11) has a second hysteresis controller (23) for generating an additional switching signal ($Z_{mod}$) for a selected phase of the inverter (WR1) as a function of a zero sequence current ($i_{0\_WR1}$) of the inverter (WR1), wherein the additional switching signal ($Z_{mod}$) is set to the value +1 if the zero sequence current ($i_{0\_WR1}$) is greater than a positive interval limit ($+i_{Hyst}$) of a first hysteresis window, is set to the value -1 if the zero sequence current ($i_{0\_WR1}$) is smaller than a negative interval limit ($-i_{Hyst}$) of the first hysteresis window, and is set to the value 0 in each case if the zero sequence current ($i_{0\_WR1}$) exceeds or falls below the value zero
- and the switching logic (25) is designed to set the switching signal ($Y_{U\_WR1}$, $Y_{V\_WR1}$, $Y_{W\_WR1}$) for the selected phase to the value -1 if the additional switching signal ($Z_{mod}$) assumes the value +1, to the value +1 if the additional switching signal ($Z_{mod}$) assumes the value -1, and otherwise to the standard switching signal ($Z_{U\_WR1}$, $Z_{V\_WR1}$, $Z_{W\_WR1}$) of the hysteresis current control for the selected phase, and to set the switching signals ($Y_{U\_WR1}$, $Y_{V\_WR1}$, $Y_{W\_WR1}$) for the other two phases to the standard switching signal ($Z_{U\_WR1}$, $Z_{V\_WR1}$, $Z_{W\_WR1}$) for the respective phase in each case.

**Revendications**

**1.** Procédé de régulation de courants ($i_{U\_WR1}$, $i_{V\_WR1}$, $i_{W\_WR1}$) de phase d'un onduleur (WR1) triphasé, dans lequel

- on régule les courants ($i_{U\_WR1}$, $i_{V\_WR1}$, $i_{W\_WR1}$) de phase de l'onduleur (WR1) par une régulation de courant d'hystérésis direct par des signaux ($Y_{U\_WR1}$, $Y_{V\_WR1}$, $Y_{W\_WR1}$) de coupure, qui ont chacun la plage de valeur (-1, +1), **caractérisé en ce que**
- on connecte une phase sélectionnée de l'onduleur (WR1) en fonction d'un courant ($i_{0\_WR1}$) de système homopolaire de l'onduleur (WR1),

- dans lequel on prescrit une première fenêtre d'hystérésis au courant ($i_{0\_WR1}$) de système homopolaire avec une limite ($-i_{Hyst}$) d'intervalle négative et une limite ($+i_{Hyst}$) d'intervalle positive,
- on met un signal ($Z_{mod}$) de coupure supplémentaire à la valeur +1 si le courant ($i_{0\_WR1}$) de système homopolaire est plus grand que la limite ($+i_{Hyst}$) d'intervalle positive, à la valeur -1 si le courant ($i_{0\_WR1}$) de système homopolaire est plus petit que la limite ($-i_{Hyst}$) d'intervalle négative et, respectivement, à la valeur 0 si le courant ($i_{0\_WR1}$) de système homopolaire est supérieur ou inférieur à la valeur 0,
- on met le signal ($Y_{U\_WR1}$, $Y_{V\_WR1}$, $Y_{W\_WR1}$) de coupure de la phase sélectionnée à la valeur -1 si le signal ($Z_{mod}$) de coupure supplémentaire prend la valeur +1, à la valeur +1 si le signal ($Z_{mod}$) de coupure supplémentaire prend la valeur -1 et, sinon, on le fait coïncider avec un signal ($Z_{U\_WR1}$, $Z_{V\_WR1}$, $Z_{W\_WR1}$) de coupure standard de la régulation de courant d'hystérésis de la phase sélectionnée et
- les signaux ($Y_{U\_WR1}$, $Y_{V\_WR1}$, $Y_{W\_WR1}$) de coupure des autres phases coïncident, respectivement, avec le signal ($Z_{U\_WR1}$, $Z_{V\_WR1}$, $Z_{W\_WR1}$) de coupure standard de la phase respective.

2. Procédé suivant la revendication 1,
   **caractérisé en ce que** l'on change la phase sélectionnée en fonction d'une position en phase de tensions de sortie de l'onduleur (WR1).

3. Procédé suivant l'une des revendications précédentes,
   **caractérisé en ce que** l'on utilise comme phase sélectionnée, respectivement la phase ayant la tension de sortie de l'onduleur (WR1) la plus grande en valeur absolue.

4. Procédé suivant l'une des revendications précédentes,
   caractérisé en que l'on utilise comme régulation de courant d'hystérésis une régulation de courant SDHC.

5. Procédé de régulation de courants ($i_{U\_WR1}$, $i_{V\_WR1}$, $i_{W\_WR1}$, $i_{U\_WR2}$, $i_{V\_WR2}$, $i_{W\_WR2}$) de plusieurs onduleurs (WR1, WR2) triphasés montés en parallèle, dans lequel on régule les courants ($i_{U\_WR1}$, $i_{V\_WR1}$, $i_{W\_WR1}$, $i_{U\_WR2}$, $i_{V\_WR2}$, $i_{W\_WR2}$) de phase de chaque onduleur (WR1, WR2) par un procédé suivant l'une des revendications précédentes.

6. Procédé suivant la revendication 5,
   **caractérisé en ce que**

   - pour chaque onduleur (WR1, WR2), on maintient un vecteur d'espace de courant réel des valeurs réelles des courants ($i_{U\_WR1}$, $i_{V\_WR1}$, $i_{W\_WR1}$, $i_{U\_WR2}$, $i_{V\_WR2}$, $i_{W\_WR2}$) de phase de l'onduleur (WR1, WR2) dans une deuxième fenêtre d'hystérésis autour d'un vecteur d'espace de courant de consigne,
   - on forme le vecteur d'espace de courant réel d'un premier onduleur (WR1) à partir des trois courants ($i_{U\_WR1}$, $i_{V\_WR1}$, $i_{W\_WR1}$) de phase du premier onduleur (WR1),
   - et on forme le vecteur d'espace de courant réel de chaque autre onduleur (WR2) à partir d'exactement deux courants ($i_{U\_WR2}$, $i_{V\_WR2}$, $i_{W\_WR2}$) de phase de l'onduleur (WR2) en supposant que les trois courants ($i_{U\_WR2}$, $i_{V\_WR2}$, $i_{W\_WR2}$) de phase de l'onduleur (WR2) s'additionnent à 0, dans lequel on fait varier la sélection des deux courants ($i_{U\_WR2}$, $i_{V\_WR2}$, $i_{W\_WR2}$) de phase à partir desquels le vecteur d'espace de courant réel est formé.

7. Procédé suivant la revendication 5 ou 6,
   **caractérisé en ce que** l'on régule les courants ($i_{U\_WR1}$, $i_{V\_WR1}$, $i_{W\_WR1}$, $i_{U\_WR2}$, $i_{V\_WR2}$, $i_{W\_WR2}$) de phase de chaque onduleur (WR1, WR2) indépendamment des valeurs réelles des courants ($i_{U\_WR1}$, $i_{V\_WR1}$, $i_{W\_WR1}$, $i_{U\_WR2}$, $i_{V\_WR2}$, $i_{W\_WR2}$) de phase de l'autre onduleur (WR1, WR2).

8. Procédé suivant la revendication 6 ou 7,
   **caractérisé en ce que**, pour chacun des autres onduleurs (WR2), on utilise comme phase sélectionnée la phase dont le courant ($i_{U\_WR2}$, $i_{V\_WR2}$, $i_{W\_WR2}$) de phase n'a pas été utilisé pour former le vecteur d'espace de courant réel.

9. Procédé suivant l'une des revendications 6 à 8,
   **caractérisé en ce que** l'on utilise, pour tous les onduleurs (WR1, WR2), à chaque instant, le même vecteur d'espace de courant de consigne.

10. Procédé suivant l'une des revendications 6 à 9,
    **caractérisé en ce que** l'on forme chaque vecteur d'espace de courant réel et chaque vecteur d'espace de courant de consigne dans un système de coordonnées fixes par rapport au stator.

**11.** Procédé suivant la revendication 10,
**caractérisé en ce que** l'on forme le vecteur d'espace de courant réel du premier onduleur (WR1) suivant

$$\begin{pmatrix} i_{\alpha\_WR1} \\ i_{\beta\_WR1} \\ i_{0\_WR1} \end{pmatrix} = \frac{1}{3} \begin{pmatrix} 2 & -1 & -1 \\ 0 & \sqrt{3} & -\sqrt{3} \\ 1 & 1 & 1 \end{pmatrix} * \begin{pmatrix} i_{U\_WR1} \\ i_{V\_WR1} \\ i_{W\_WR1} \end{pmatrix}$$

**12.** Procédé suivant la revendication 10 ou 11,
**caractérisé en ce que** l'on forme le vecteur d'espace de courant réel de chaque autre onduleur (WR2) en fonction des courants ($i_{U\_WR2}$, $i_{V\_WR2}$, $i_{W\_WR2}$) de phase utilisés pour sa formation suivant

$$\ast$$
$$\begin{pmatrix} i_{\alpha\_WR2} \\ i_{\beta\_WR2} \\ i_{0\_WR2} \end{pmatrix} = \frac{1}{3} \begin{pmatrix} 3 & 0 & 0 \\ \sqrt{3} & 2\sqrt{3} & 0 \\ 0 & 0 & 0 \end{pmatrix} * \begin{pmatrix} i_{U\_WR2} \\ i_{V\_WR2} \\ i_{W\_WR2} \end{pmatrix}$$

ou suivant

$$\ast\ast$$
$$\begin{pmatrix} i_{\alpha\_WR2} \\ i_{\beta\_WR2} \\ i_{0\_WR2} \end{pmatrix} = \frac{1}{3} \begin{pmatrix} 0 & -3 & -3 \\ 0 & \sqrt{3} & -\sqrt{3} \\ 0 & 0 & 01 \end{pmatrix} * \begin{pmatrix} i_{U\_WR2} \\ i_{V\_WR2} \\ i_{W\_WR2} \end{pmatrix}$$

ou suivant

$$\ast\ast\ast$$
$$\begin{pmatrix} i_{\alpha\_WR2} \\ i_{\beta\_WR2} \\ i_{0\_WR2} \end{pmatrix} = \frac{1}{3} \begin{pmatrix} 3 & 0 & 0 \\ -\sqrt{3} & 0 & -2\sqrt{3} \\ 01 & 0 & 0 \end{pmatrix} * \begin{pmatrix} i_{U\_WR2} \\ i_{V\_WR2} \\ i_{W\_WR2} \end{pmatrix}$$

**13.** Système (1) de régulation pour réguler des courants ($i_{U\_WR1}$, $i_{V\_WR1}$, $i_{W\_WR1}$) de phase d'un onduleur (WR1) triphasé par une régulation de courant d'hystérésis directe par des signaux ($Y_{U\_WR1}$, $Y_{V\_WR1}$, $Y_{W\_WR1}$), de coupure, qui ont chacun la plage (-1, +1) de valeur, le système (1) de régulation comprenant

- un dispositif (9) de mesure du courant pour relever les valeurs réelles des courants ($i_{U\_WR1}$, $i_{V\_WR1}$, $i_{W\_WR1}$) de phases de l'onduleur (WR1),
- un dispositif (11) de régulation de courant d'hystérésis ayant un premier régleur (21) d'hystérésis pour produire des signaux $Z_{U\_WR1}$, $Z_{V\_WR1}$, $Z_{W\_WR1}$) de coupure standard pour la régulation de courant d'hystérésis directe des courant ($i_{U\_WR1}$, $i_{V\_WR1}$, $i_{W\_WR1}$ ) de phases,
- et une logique (25) de coupure pour produire les signaux ($Y_{U\_WR1}$, $Y_{V\_WR1}$, $Y_{W\_WR1}$) de coupure,

**caractérisé en ce que**

- le dispositif (11) de réglage de courant d'hystérésis a un deuxième régleur (23) d'hystérésis pour produire un signal ($Z_{mod}$) de coupure supplémentaire d'une phase sélectionnée de l'onduleur (WR1) en fonction d'un courant ($i_{0\_WR1}$) de système homopolaire de l'onduleur (WR1),
le signal ($Z_{mod}$) de coupure supplémentaire étant réglé à la valeur +1 si le courant ($i_{0\_WR1}$) de système homopolaire est plus grand qu'une limite ($+i_{Hyst}$) d'intervalle positive d'une première fenêtre d'hystérésis, à la valeur -1 si le courant ($i_{0\_WR1}$) de système homopolaire est plus petit qu'une limite ($-i_{Hyst}$) d'intervalle négative de la première fenêtre d'hystérésis et, respectivement, à la valeur 0 si le courant ($i_{0\_WR1}$) de système homopolaire est supérieur ou inférieur à la valeur zéro,

- et la logique (25) de coupure est conçue pour mettre le signal ($Y_{U\_WR1}$, $Y_{V\_WR1}$, $Y_{W\_WR1}$) de coupure de la phase sélectionnée à la valeur -1 si le signal ($Z_{mod}$) de coupure supplémentaire prend la valeur +1 à la valeur +1, si le signal ($Z_{mod}$) de coupure supplémentaire prend la valeur -1, et sinon, au signal ($Z_{U\_WR1}$, $Z_{V\_WR1}$, $Z_{W\_WR1}$) de coupure standard de la régulation de courant d'hystérésis de la phase sélectionnée et pour mettre les signaux ($Y_{U\_WR1}$, $Y_{V\_WR1}$, $Y_{W\_WR1}$) de coupure des autres deux phases, respectivement au signal ($Z_{U\_WR1}$, $Z_{V\_WR1}$, $Z_{W\_WR1}$) de coupure standard pour les autres phases.

FIG 1

EP 3 476 035 B1

FIG 2

EP 3 476 035 B1

FIG 3

$i_{U\_WR1}$
$i_{V\_WR1}$
$i_{W\_WR1}$

21

$Z_{U\_WR1}$
$Z_{V\_WR1}$
$Z_{W\_WR1}$
$Z_P$

$i_{O\_WR1}$

23

$Z_{mod}$

11

25

$Y_{U\_WR1}$
$Y_{V\_WR1}$
$Y_{W\_WR1}$

FIG 4

$Z_{mod}$

$+1$

$-i_{Hyst}$

$0$

$+i_{Hyst}$

$i_{O\_WR1}$

$-1$

EP 3 476 035 B1

FIG 5

FIG 6

**IN DER BESCHREIBUNG AUFGEFÜHRTE DOKUMENTE**

**In der Beschreibung aufgeführte Patentdokumente**

- US 4641075 A

**In der Beschreibung aufgeführte Nicht-Patentliteratur**

- **YU ZHANG et al.** Sliding mode based zero-sequence current mitigation of parallel-connected power converters. *Electric Machines and Drives Conference, 2009, IEMDC'09, IEEE International,* 2009, 1658-1663

- **H. WIEßMANN.** Hochdynamisches direktes Stromregelverfahren für Pulswechselrichter im Vergleich zu PWM-Verfahren. Verlag Dr. Hut, 2012